# EUROPÄISCHE PATENTSCHRIFT

(11) **EP 0 886 089 B1**
(45) Veröffentlichungstag und Bekanntmachung des Hinweises auf die Patenterteilung: **02.10.2002**
(21) Anmeldenummer: 98109803.1
(22) Anmeldetag: 28.05.1998
(51) Int. Cl.: F16K 1/226, F16K 27/02

(54) **Absperrklappe**
Butterfly valve
Robinet à papillon

(30) Priorität: 18.06.1997 DE 19725725
(43) Veröffentlichungstag der Anmeldung: 23.12.1998
(73) Patentinhaber: VAG - Armaturen GmbH, D-68305 Mannheim (DE)
(72) Erfinder: Schmidt, Manfred, Dipl.-Ing., 68163 Mannheim (DE)
(74) Vertreter: Lichti, Heiner, Dipl.-Ing.

(56) Entgegenhaltungen:
- DE-A- 2 752 558
- DE-A- 2 923 885
- US-A- 3 291 443
- US-A- 4 332 271
- US-A- 4 580 593
- US-A- 4 674 528
- PATENT ABSTRACTS OF JAPAN vol. 014, no. 300 (M-0991), 28. Juni 1990 (1990-06-28) & JP 02 097777 A (TOMOE GIJUTSU KENKYUSHO:KK), 10. April 1990 (1990-04-10)

## Beschreibung

Die Erfindung betrifft eine Absperrklappe aus einer diametral in Lagern schwenkbaren Klappenscheibe mit elastischem überzug und einer mit dieser fest verbundenen Welle zum Betätigen der Klappenscheibe.

Leitungsarmaturen, so auch Absperrklappen, weisen ein eigenes Gehäuse auf, in welchem die Klappenscheibe gelagert ist, die mit der mit ihr verbundenen, nach außen geführten Welle betätigt werden kann. Die Klappenscheibe läßt sich aus einer Öffnungsstellung, in der sie den Strömungsweg mehr oder weniger freigibt, in die Schließstellung bewegen, in der sie den freien Querschnitt im Gehäuse verschließt. Das Gehäuse weist zu beiden Seiten der Armatur Flansche, Muffen oder aufwendig angebrachte Rohrstücke auf, über die sie mit den Enden je einer Rohrleitung verbunden wird. Bei Rohrleitungen aus Metallstoffen werden im allgemeinen Flanschverbindungen mit Schraubbefestigung verwendet.

Die US 4 580 593 A und DE 29 23 885 A1 beschreiben solche, auch als "Einbauklappen" bezeichnete Leitungsarmaturen. Sie werden entweder über am Gehäuse angeordnete Flansche mit den Enden der Rohrleitung verbunden oder mittels Zugschrauben zwischen zwei benachbarten, endseitigen Flanschen der Rohrleitung verklemmt.

Bei Kunststoffleitungen läßt sich dieses System nicht ohne weiteres übernehmen. Hier erfolgt der Anschluß der Kunststoffleitungen an die Stahlarmatur häufig über Muffen-, Klemmverbindungen oder durch Schweißverbindung der Rohrleitung mit den an der Armatur angebrachten Rohrstücken. Diese Verbindungstechnik ist aufwendig und funktionsanfällig.

Der US 4 674 528 A ist eine Absperrklappe aus zwei miteinander verschweißten Metallscheiben entnehmbar, die außenseitig jeweils mit einer korrosionsbeständigen Beschichtung versehen sind und eine Umfangsdichtung aufweisen, die mit dem metallischen Sitz eines Rohrabschnitts zusammenwirkt. An den einander zugekehrten Seiten der Metallscheiben ist eine durchgehende, zentrale Ausnehmung vorgesehen, die nach dem Verschweißen der Metallscheiben unter Bildung der Klappe zur Durchführung einer Welle dient, mittels welcher die Klappe in dem Rohrabschnitt aus Metall gelagert ist und die zur Betätigung der Klappe dient. Die Klappe sitzt unmittelbar in dem Rohrabschnitt, welcher über ein Innengewinde mit der Rohrleitung verbunden wird. Besteht die Rohrleitung aus Kunststoff, so stellt sich auch hier das Problem einer funktionsanfälligen Verbindung des Metallrohrabschnitts der Armatur mit der Kunststoffrohrleitung.

Der Erfindung liegt die Aufgabe zugrunde, eine Ausbildung vorzuschlagen, bei der funktionsanfällige Klemm- oder Rohrstückverbindungen zwischen der Stahlarmatur und einer Kunststoffrohrleitung vermieden werden.

Diese Aufgabe wird erfindungsgemäß bei einer Absperrklappe der eingangs genannten Art dadurch gelöst, daß die Klappenscheibe in einem durchgehenden Rohrstück aus Kunststoff mit einer diametral durchgehenden Bohrung angeordnet ist, indem sie von einer Seite in das Rohrstück einschiebbar und mittels der durch die eine Bohrung eingeschobenen Welle und einem durch die andere Bohrung eingeschobenen, die Klappenscheibe durchgreifenden und mit der Welle verbundenen Bolzen in dem Rohrstück positioniert ist, wobei ein Gehäusering vorgesehen ist, der mit diametralen Bohrungen mit je einem Lager versehen ist, die mit den Bohrungen in dem Rohrstück ausgefluchtet sind, und der Gehäusering einen an seiner einen Bohrung ansetzenden Flansch aufweist, in dem die Welle gelagert ist.

Die Erfindung zeichnet sich durch die vollständige Abkehr von herkömmlichen Armatur-Konstruktionen aus. Sie schafft die Möglichkeit, in ein durchgehendes Kunststoffrohrstück eine Absperrklappe einzusetzen. Zu diesem Zweck wird das Rohrstück mit einer diametral durchgehenden Bohrung versehen, die zur Aufnahme und Positionierung der gesamten Armatur dient. Zu diesem Zweck wird die in herkömmlicher Weise mit einem gummielastischen Überzug versehene Klappenscheibe von einer Seite des Rohrstücks eingedrückt, bis sie die durchgehende Bohrung im Rohrstück erreicht. Durch die eine Bohrung wird die Welle eingeführt, die in herkömmlicher Weise mit einem Zapfen in die Klappenscheibe eingreift, während von der gegenüberliegenden Seite ein die Klappenscheibe durchgreifender Bolzen eingeführt und mit dem Zapfen der Welle verbunden wird. Im einfachsten Fall kann es sich dabei um einen Schraubbolzen handeln. Auf diese Weise ist die Klappe in dem Rohrstück positioniert und kann mittels der Welle zwischen der Schließ- und Öffnungssteliung geschwenkt werden.

Der mit diametralen, mit den Bohrungen im Rohrstück fluchtenden Bohrungen mit je einem Lager versehene Gehäusering weist einen an seiner einen Bohrung ansetzenden Flansch auf, in dem die Welle zusätzlich gelagert ist. Der Gehäusering stabilisiert auf diese Weise einerseits das Rohrstück im Bereich der Bohrung und nimmt andererseits die in der Schließstellung über die Klappenscheibe übertragenen Dichtkräfte wie auch die Lagerkräfte auf. Der Gehäusering kann zweiteilig ausgebildet und nach Art einer Rohrschelle auf das Rohrstück aufgesetzt sein. Vorzugsweise sind jedoch der Gehäusering und der Flansch einteilig ausgebildet und ist der Gehäusering auf das Rohrstück axial aufgeschoben.

Die erfindungsgemäß ausgebildete Armatur wird vor Ort in dort verlegten Kunststoffrohren mittels herkömmlicher Schweiß- oder Klemmverbindungen integriert. Der Übergang erfolgt also unmittelbar von Kunststoff auf Kunststoff und nicht, wie bisher, von Stahl auf Kunststoff.

In den Gehäusering können innenseitig Dichtringe eingelegt sein, die zu beiden Seiten der Bohrungen in dem Rohrstück angeordnet sind und als zusätzliche Dichtung dienen, so daß das in dem Rohrstück geführte Medium im Bereich der Armatur nicht austreten kann.

Gemäß einem vorteilhaften Ausführungsbeispiel ist der Bolzen gegen eine Hülse verspannt, die in die Klappe eingreift und in dem Lager im Gehäusering gelagert ist. Diese Hülse übernimmt also einerseits die Lagerung und leitet andererseits die Kräfte von der Klappenscheibe in den Gehäusering ein.

Auf der Innenseite des Rohrstückes kann im Sitzbereich der Klappenscheibe ein Metallring eingelegt sein, so daß hohe Dichtkräfte die von der Klappenscheibe auf den Metallring übertragen werden, gleichmäßig und großflächig auf das Kunststoff-Rohrstück verteilt werden. In diesem Fall ist das Rohrstück vorzugsweise ein Spritzgußteil.

Nachstehend ist die Erfindung anhand von in der Zeichnung wiedergegebenen Ausführungsbeispielen beschrieben. In der Zeichnung zeigen:
- Figur 1: einen Axialschnitt eines Ausführungsbeispiels einer Absperrklappe;
- Figur 2: einen Radialschnitt hierzu und
- Figur 3: einen der Fig. 1 entsprechenden Axialschnitt eines weiteren Ausführungsbeispiels.

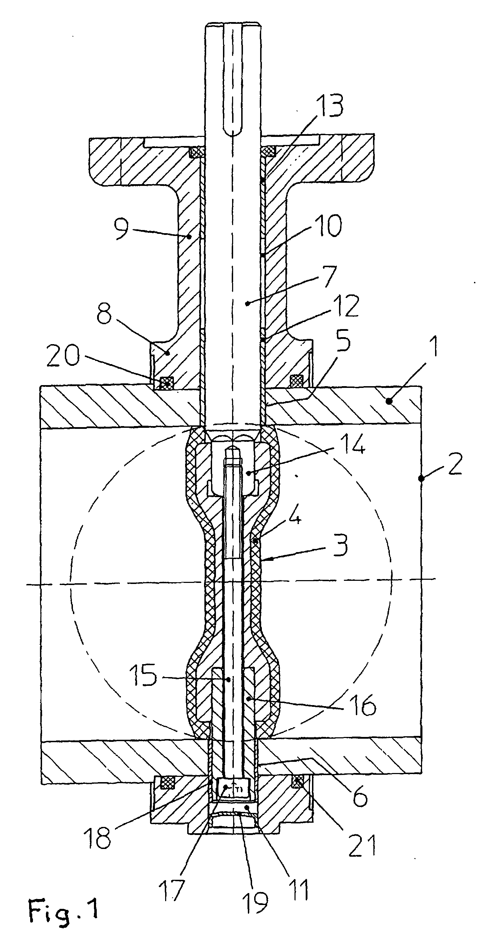

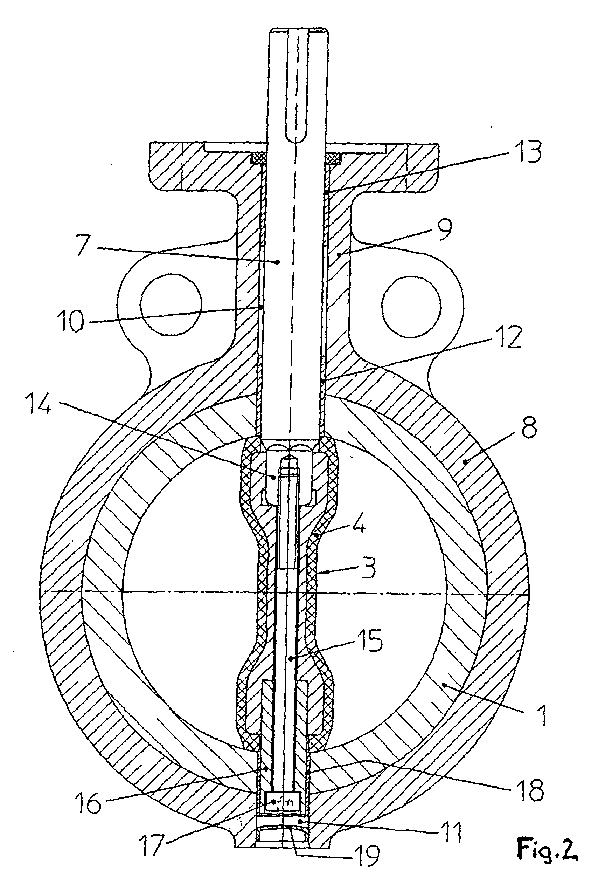

Die Absperrklappe gemäß Fig. 1 bis 3 weist ein Rohrstück 1 aus Kunststoff auf, das eine im wesentlichen kreiszylindrische Form besitzt und an beiden Stirnseiten 2 offen ist. Zum Einbau einer Klappenscheibe 3 mit einem gummielastischen Überzug 4 ist das Kunststoff-Rohrstück 1 mit einer durchgehenden Bohrung versehen, weist also gegenüberliegende, fluchtende Bohrungen 5 und 6 auf. Die Klappenscheibe 3 wird in das Rohrstück 1 eingeschoben, wobei der elastische Überzug 4 eine ausreichende Verformung zuläßt.

Die Absperrklappe weist zu ihrer Betätigung eine Welle 7 auf, die in einem Flansch 9 eines auf das Rohrstück 1 aufgeschobenen Gehäuserings 8 gelagert ist. Der Gehäusering weist gleichfalls diametral angeordnete Bohrungen auf, von denen die eine in eine Bohrung 10 im Flansch 9 übergeht und mit der Bohrung 5 im Rohrstück 1 fluchtet, während die gegenüberliegende Bohrung 11 mit der Bohrung 6 fluchtet. Die Welle 7 ist in Lagerbuchsen 12, 13 gelagert, wobei sich die Lagerbuchse 12 sowohl in die Bohrung 10 als auch in die Bohrung 5 des Rohrstücks 1 erstreckt. Die Welle 7 weist einen in die Klappenscheibe 3 eingreifenden Zapfen 14 auf, der beispielsweise mit Innengewinde versehen ist, in das ein von der gegenüberliegenden Seite durch die Bohrungen 11 und 6 eingeführter Schraubbolzen 15 eingreift.

Der Schraubbolzen 15 sitzt in einer Hülse 16, die durch die Bohrung 11 des Gehäuserings 8 eingeschoben ist und gleichfalls in die Klappenscheibe 3 eingreift. Die Hülse 16 bildet das Widerlager für den Kopf 17 des Bolzens, der beispielsweise einen Innensechskant aufweist.

Die Hülse 16 wiederum ist in einer Lagerbuchse 18 gelagert, die in die Bohrung 6 des Rohrstücks 1 eingesetzt ist und sich in die Bohrung 11 des Gehäuserings 8 erstreckt. Die Bohrung 11 ist durch eine Kappe 19 verschlossen.

Das Rohrstück 1 kann aus einem extrudierten Kunststoffrohr durch Ablängen auf Wunschmaß hergestellt sein.

Zur Montage der Klappenscheibe 3 wird das Rohrstück 1 durchbohrt, so daß sich die Bohrungen 5 und 6 bilden. Anschließend wird die Klappenscheibe 3 von einer Seite 2 her eingeschoben, bis sie mit ihrer Durchgangsbohrung mit den diametral gegenüberliegenden Bohrungen 5, 6 des Rohrstücks fluchtet. Daraufhin wird der Gehäusering 8 auf das Rohrstück 1 aufgeschoben, bis seine Bohrungen 10, 11 mit den Bohrungen 5, 6 fluchten. Anschließend werden die Lagerhülsen 12 und 18 eingeschoben. Ferner wird die Hülse 16 in das Lager 18 eingeschoben. Daraufhin werden von der einen Seite die Welle 7, von der anderen Seite der Bolzen 15 eingebracht und miteinander verschraubt, so daß sich die Klappenscheibe in Betriebsstellung befindet.

An der Innenseite des Gehäuserings 8 können Dichtungsringe 20, 21 eingelegt sein. Sofern notwendig, kann das Kunststoff-Rohrstück 1 von einer Seite her abgedreht werden, um im Falle von Maßabweichungen einen satten Sitz des Gehäuserings 8 auf dem Mantel des Rohrstücks zu gewährleisten.

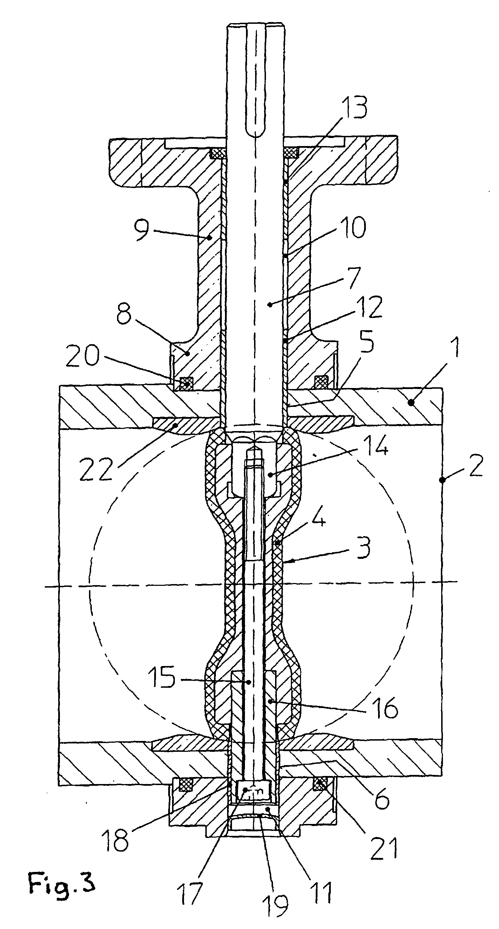

Bei dem Ausführungsbeispiel gemäß Fig. 3 ist im Sitzbereich der Klappenscheibe 3 ein Metallring 22 eingelegt, der die Dichtkräfte der Klappenscheibe 3 gleichmäßig und auf einer größeren Fläche auf das Kunststoff-Rohrstück 1 überträgt. Der Metallring 22 ist an seiner Innenseite mit einer ringförmig umlaufenden Kalotte versehen, der sich die elastische Ummantelung der Klappenscheibe 3 anpaßt, so daß in der Schließstellung ein einwandfreier Dichtsitz gegeben ist. Bei diesem Ausführungsbeispiel ist das Rohrstück 1 ein Spritzgußteil, in das der Metallring 22 als Einlage eingespritzt ist.

## Patentansprüche

1. Absperrklappe aus einer diametral in Lagern (12, 18) schwenkbaren Klappenscheibe (3) mit elastischem Überzug (4) und einer mit dieser fest verbundenen Welle (7) zum Betätigen der Klappenscheibe (3), **dadurch gekennzeichnet, daß** die Klappenscheibe (3) in einem durchgehenden Rohrstück (1) aus Kunststoff mit einer diametral durchgehenden Bohrung (5, 6) angeordnet ist, indem sie von einer Seite (2) in das Rohrstück (1) einschiebbar und mittels der durch die eine Bohrung (5) eingeschobenen Welle (7) und einem durch die andere Bohrung (6) eingeschobenen, die Klappenscheibe (3) durchgreifenden und mit der Welle (7) verbundenen Bolzen (15) in dem Rohrstück (1) positioniert ist, wobei ein Gehäusering (8) vorgesehen ist, der mit diametralen Bohrungen (10, 11) mit je einem Lager (12, 18) versehen ist, die mit den Bohrungen (5, 6) in dem Rohrstück (1) ausgefluchtet sind, und der Gehäusering (8) einen an seiner einen Bohrung (10) ansetzenden Flansch (9) aufweist, in dem die Welle (7) gelagert ist.

2. Absperrklappe nach Anspruch 1, **dadurch gekennzeichnet, daß** der Gehäusering (8) und der Flansch (9) einteilig sind und der Gehäusering auf das Rohrstück (1) axial aufgeschoben ist.

3. Absperrklappe nach Anspruch 1 oder 2, **dadurch gekennzeichnet, daß** in den Gehäusering (8) innenseitig Dichtringe (20, 21) eingelegt sind, die zu beiden Seiten der Bohrungen (5, 6) in dem Rohrstück (1) angeordnet sind.

4. Absperrklappe nach einem der Ansprüche 1 bis 3, **dadurch gekennzeichnet, daß** der Bolzen (15) gegen eine Hülse (16) verspannt ist, die in die Klappenscheibe (3) eingreift und in dem Lager (18) im Gehäusering (8) gelagert ist.

5. Absperrklappe nach einem der Ansprüche 1 bis 4, **dadurch gekennzeichnet, daß** in das Rohrstück (1) ein Metallring eingelegt ist, der den Dichtsitz für die Klappenscheibe (3) bildet.

## Claims

1. Butterfly valve comprising a diametral, pivotable valve disk (3) in bearings (12, 18) and having an elastic covering (4) and a shaft (7) firmly connected thereto for operating the valve disk (3), **characterized in that** the valve disk (3) is placed in a through plastic pipe length (1) with a diametral, through bore (5, 6), **in that** it can be inserted from one side (2) into the pipe length (1) and is positioned in the latter by means of the shaft (7) slid into one bore (5) and a bolt (15) slid through the other bore (6), passing through the valve disk (3) and connected to the shaft (7), a casing ring (8) being provided which has diametral bores (10, 11) with in each case one bearing (12, 18), which are aligned with the bores (5, 6) in the pipe length (1) and the casing ring (8) has a flange (9) attached to its one bore (10) and in which is mounted the shaft (7).

2. Butterfly valve according to claim 1, **characterized in that** the casing ring (8) and flange (9) are in one piece and the casing ring is axially engaged on the pipe length (1).

3. Butterfly valve according to claim 1 or 2, **characterized in that** packing rings (20, 21) are inserted on the inside in casing ring (8) and are positioned on either side of the bores (5, 6) in the pipe length (1).

4. Butterfly valve according to one of the claims 1 to 3, **characterized in that** the bolt (15) is braced against a sleeve (16), which engages in the valve disk (3) and is mounted in the bearing (18) in casing ring (8).

5. Butterfly valve according to one of the claims 1 to 4, **characterized in that** a metal ring is inserted in the pipe length (1) and forms the sealing seat for the valve disk (3).

## Revendications

1. Vanne d'isolement composée d'un papillon de clapet (3) à revêtement élastique (4) pivotant diamétralement dans des paliers (12,18) et d'un axe (7) rigidement relié à celui-ci pour l'actionnement du papillon de clapet (3), **caractérisée en ce que** le papillon de clapet (3) est disposé dans une fraction de tuyau (1) traversant en matière plastique présentant un perçage (5,6) diamétral traversant, le papillon pouvant être introduit par un côté (2) dans la fraction de tuyau (1) et étant maintenu dans la fraction de tuyau au moyen de l'arbre (7) introduit par l'un des perçages (5) et au moyen d'un goujon (15) introduit par l'autre perçage (6), traversant le papillon de clapet (3) et relié à l'axe (7), un anneau de carter (8) étant prévu présentant des perçages (10,11) diamétraux comportant chacun un palier (12,18) aligné avec les perçages (5,6) dans la fraction de tuyau (1), et l'anneau de carter (8) présentant un flasque (9) adjacent sur l'un de ses perçages (10) dans lequel l'axe (7) est monté.

2. Vanne d'isolement selon la revendication 1, **caractérisée en ce que** l'anneau de carter (8) et le flasque (9) forment une seule pièce et **en ce que** l'anneau de carter est enfilé axialement sur la fraction de tuyau (1).

3. Vanne d'isolement selon la revendication 1 ou 2, **caractérisée en ce que** des joints d'étanchéité (20,21), disposés de part et d'autre des perçages (5,6) de la fraction de tuyau (1) sont insérés à l'intérieur de l'anneau de carter (8).

4. Vanne d'isolement selon l'une quelconque des revendications 1 à 3, **caractérisée en ce que** le goujon (15) est serré contre un manchon (16) venant en prise sur le papillon de clapet (3) et monté sur le palier (18) dans l'anneau de carter (8).

5. Vanne d'isolement selon l'une quelconque des revendications 1 à 4, **caractérisée en ce qu'**un anneau métallique servant de siège d'étanchéité au papillon de clapet (3) est inséré dans la fraction de tuyau (1).
